# EUROPÄISCHE PATENTSCHRIFT

(11) **EP 3 652 849 B1**
(45) Veröffentlichungstag und Bekanntmachung des Hinweises auf die Patenterteilung: **06.12.2023**
(21) Anmeldenummer: 18769066.4
(22) Anmeldetag: 28.08.2018
(51) Int. Cl.: H02M 5/458, H02M 7/797, H02M 7/08, H02M 1/00

(54) **ZWISCHENKREISKOPPLUNG IN ANTRIEBSVERBÄNDEN**
COUPLING BETWEEN CIRCUITS IN DRIVE NETWORKS
COUPLAGE DE CIRCUIT INTERMÉDIAIRE DANS DES GROUPES D'ENTRAÎNEMENT

(30) Priorität: 14.09.2017 EP 17191088
(43) Veröffentlichungstag der Anmeldung: 20.05.2020
(73) Patentinhaber: Siemens Aktiengesellschaft, 80333 München (DE)
(72) Erfinder: LANGE, Robert, 08451 Crimmitschau (DE); STROBELT, Holger, 08328 Stützengrün (DE)
(74) Vertreter: Siemens Patent Attorneys
(86) Internationale Anmeldenummer: PCT/EP2018/073071
(87) Internationale Veröffentlichungsnummer: WO 2019/052804

(56) Entgegenhaltungen:
- EP-A1- 0 682 402
- DE-C1- 19 957 132
- JP-A- 2005 176 475

## Beschreibung

Die Erfindung betrifft eine Stromrichteranordnung umfassend wenigstens einen ersten Umrichter und wenigstens einen zweiten Umrichter, wobei die Umrichter jeweils einen Spannungszwischenkreis und einen lastseitigen Stromrichter aufweisen, wobei der Spannungszwischenkreis des ersten Umrichters mit dem Spannungszwischenkreis des zweiten Umrichters mit wenigstens einer Verbindungsleitung elektrisch verbunden ist.

Elektrische Antriebe umfassen gewöhnlich eine elektrische Maschine, die über einen Umrichter an einem Wechselspannungsnetz betrieben wird. Dieser Umrichterbetrieb ermöglicht einen drehzahlvariablen Betrieb der als Motor oder Generator arbeitenden elektrischen Maschine. Das Wechselspannungsnetz kann hierbei ein einphasiges oder ein dreiphasiges Wechselspannungsnetz sein.

Eine Netzfrequenz des Wechselspannungsnetzes richtet der Umrichter, der daher auch als Frequenzumrichter bezeichnet wird, in eine Frequenz um, die sich nach den Erfordernissen der elektrischen Maschine und deren aktueller Last richtet.

Der Umrichter umfasst einen netzseitigen Stromrichter sowie einen lastseitigen Stromrichter. Sogenannte Spannungszwischenkreisumrichter weisen zudem einen Spannungszwischenkreis mit einem Spannungszwischenkreiskondensator auf. Zudem kann optional eine Vorladeschaltung im Spannungszwischenkreis realisiert sein.

Der netzseitige Stromrichter ist ein Gleichrichter, der eine dreiphasige Wechselspannung - typischerweise mittels einer B6 Brückenschaltung mit Dioden - in eine Gleichspannung umwandelt. Der lastseitige Stromrichter ist als Wechselrichter ausgeführt und wandelt die Gleichspannung im Spannungszwischenkreis in eine von der elektrischen Maschine benötigte Wechselspannung mit bestimmter Amplitude und Frequenz.

Elektrische Antriebe werden häufig in Antriebsverbänden von zwei oder mehr elektrischen Antrieben betrieben, um mitunter beim Abbremsen einer elektrischen Maschine frei werdende elektrische Energie zur Beschleunigung einer anderen elektrischen Maschine zu nutzen. Wird der elektrische Antrieb beschleunigt, arbeitet die elektrische Maschine als Motor. Wird der elektrische Antrieb abgebremst, arbeitet die elektrische Maschine als Generator.

Der Energieaustausch gelingt, indem die Umrichter, genauer gesagt die Spannungszwischenkreise der Umrichter, über eine Zwischenkreiskopplung miteinander verbunden sind.

Wird die im Generatorbetrieb frei werdende elektrische Energie nicht oder nicht gänzlich übernommen, kann diese beispielsweise mittels eines Bremschoppers auf einen Bremswiderstand gepulst werden, der die elektrische Energie in Wärme umwandelt. Eine weitere energieeffiziente Möglichkeit stellt eine Rückspeisung der frei werdenden Bremsenergie ins Wechselspannungsnetz mittels eines meist sehr teuren rückspeisefähigen Umrichters dar.

Für die Zwischenkreiskopplung sind zwei wesentliche Kopplungsarten bekannt: Eine harte Kopplung und eine Kopplung über einen Widerstand. Diese beiden Kopplungsarten bringen jedoch einige Nachteile mit sich.

JP2005176475 A zeigt eine harte Kopplung, die mittels zweier Schalter, die mittels eines Befehls einer Steuereinheit gesteuert werden, erreicht wird.

Die harte Kopplung ist eine reine elektrische Verbindung eines Pluspols eines Spannungszwischenkreises eines ersten Umrichters mit einem Pluspol eines Spannungszwischenkreises eines zweiten Umrichters sowie eines Minuspols des Spannungszwischenkreises des ersten Umrichters mit einem Minuspol des Spannungszwischenkreises des zweiten Umrichters. Insbesondere bei Geräten zweier unterschiedlicher Leistungsklassen führt die harte Kopplung durch verschiedene Aufladezeitkonstanten beim Vorladen oder ein unausgewogenes Lastverhältnis im Betrieb zu Ausgleichsströmen, welche eine Überlastung und schnellere Alterung der netzseitigen Stromrichter und der Vorladeschaltungen zur Folge haben.

Da die netzseitigen Stromrichter häufig als passive Eingangsgleichrichter ausgeführt sind, kann eine unsymmetrische Belastung dazu führen, dass ein kleinerer Umrichter, der für eine kleinere Last ausgelegt ist, einen größeren Umrichter, der für eine größere Last ausgelegt ist, über den eigenen Brückengleichrichter mit versorgt. Besonders bei stark unsymmetrischer Belastung kann dies zu einer Überlastung oder sogar einer Zerstörung des Brückengleichrichters des kleineren Umrichters führen.

Für die Überlastung sind mitunter Unterschiede bezüglich Schleusenspannung, differentiellem Widerstand oder Bahnwiderstand der Dioden des Eingangsgleichrichters verantwortlich. Da die Schleusenspannung und der Bahnwiderstand zudem temperaturabhängig sind, führen unterschiedliche Temperaturen im Antriebsverband zu Ausgleichsströmen. Verschiedene Zeitkonstanten, die sich aus Zwischenkreiskapazitäten oder Belastungen der Umrichter ergeben, sowie verschieden große Spannungsabfälle zwischen Eingangsklemmen und Zwischenkreis tragen ebenso zur Überlastung bei. Durch eine bei der harten Kopplung entstehende Parallelschaltung der netzseitigen Stromrichter begünstigen auch unterschiedliche Toleranzen von Umrichterkomponenten hohe Ausgleichsströme.

Mittels Überdimensionierung, insbesondere der netzseitigen Stromrichter, oder Leistungsherabsetzung wird versucht, diesen Risiken entgegenzuwirken. Jedoch ist dies mit einem erhöhten Kostenaufwand verbunden.

Im Fehlerfall sind bei hart gekoppelten Zwischenkreisen sogar derart hohe Ausgleichsströme möglich, die sämtliche Komponenten des Antriebsverbands zerstören oder durch Überhitzung der Leitungen gefährliche Brände verursachen.

Die Zwischenkreiskopplung über einen Widerstand ist eine Kopplung des Pluspols des einen Spannungszwischenkreises mit dem Pluspol des anderen Spannungszwischenkreises über einen Widerstand. Auch die Minuspole werden auf diese Weise verbunden. Diese Kopplungsart führt zu einer reduzierten Dynamik, da die Ausgleichsströme mittels des Widerstands begrenzt werden. Zudem wirkt sich die hohe Verlustleistung des Widerstands negativ auf eine Energieeffizienz aus. Tritt in einem Gerät ein Kurzschluss auf, sind auch bei dieser Kopplungsart hohe Ausgleichsströme zu erwarten, die eine Schädigung der Komponenten und Leitungen verursachen.

In der Patentschrift DE 19957132 C1 wird eine Schutzvorrichtung gegen die durch Schaltvorgänge einer Energieversorgung verursachten Überspannungen an Klemmen eines elektrischen Betriebsmittels gezeigt.

Der Erfindung liegt daher die Aufgabe zugrunde, den Energieaustausch in einem Antriebsverband energieeffizient, sicher und günstig zu gestalten.

Die Lösung der Aufgabe gelingt durch eine Stromrichteranordnung gemäß Anspruch 1.

Ein Stromrichter, der zwei Halbbrücken umfasst, weist vorzugsweise vier Leistungshalbleitereinheiten auf. Eine Leistungshalbleitereinheit umfasst vorzugsweise ein Halbleiterbauelement mit einer antiparallelen Freilaufdiode. Als Halbleiterbauelement eignet sich besonders gut ein IGBT (insulated-gate bipolar transistor, deutsch:
Bipolartransistor mit isolierter Gate-Elektrode). Jedoch können auch andere Halbleiterbauelemente verwendet werden. Vorteilhaft gewährleisten diese einen selbstgeführten Stromrichterbetrieb.

Ein Halbleiterelement ist vorteilhaft, da dies ein elektronisches Element ist, welches dazu ausgebildet ist, bei einer anliegenden ersten Spannung zu sperren und bei einer anliegenden zweiten Spannung zu leiten.

Ein Stromrichter, der drei Halbbrücken umfasst, weist vorzugsweise sechs Leistungshalbleitereinheiten auf.

Die Spannungszwischenkreise der Umrichter können jeweils optional mit einer Vorladeschaltung, die wie üblich einen Vorladewiderstand parallel zu einem Schalter umfasst, ausgestattet sein.

Die Erfindung bietet den Vorteil, dass der Energieaustausch zwischen zwei Umrichtern, insbesondere zwischen den Spannungszwischenkreisen, in einem Antriebsverband energieeffizient, sicher und günstig gestaltet werden kann. Die beschriebenen Verbindungsleitungen und Teilverbindungsleitungen bewirken eine Zwischenkreiskopplung.

Umfasst der Antriebsverband drei oder mehr elektrische Antriebe, wird vorteilhaft eine Anzahl der Verbindungsleitungen, Knotenpunkte und Teilverbindungsleitungen erhöht.

Das Halbleiterbauelement zur Erzeugung des Spannungsabfalls ist als Diode ausgeführt. Als günstige und wenig komplexe Halbleiterbauelemente eignen sich Dioden besonders gut zu einer Schaffung definierter Stromausgleichspfade.

Der Spannungsabfall wird vorzugsweise mittels genau einer Diode hervorgerufen, jedoch sind auch eine Parallelschaltung von zwei oder mehr Dioden und/oder eine Serienschaltung von zwei oder mehr Dioden denkbar.

Dioden eignen sich als preiswerte Halbleiterbauelemente besonders gut, da bei einer kleinen anliegenden Spannung nur ein kleiner Strom fließt. Ein pn-Übergang der Diode ist noch sehr hochohmig. Mit steigender Spannung steigt auch leicht der Strom. Ab einer bestimmten Durchlassspannung, der sogenannten Schleusenspannung, steigt der Strom merklich an. Der pn-Übergang öffnet sich für einen Stromfluss, die Diode ist nun niederohmig.

Ist eine Spannungsdifferenz zwischen einer Spannung des Spannungszwischenkreises des ersten Umrichters und einer Spannung des Spannungszwischenkreises des zweiten Umrichters nur gering, fließt kein oder nur ein geringer Ausgleichsstrom. Überschreitet die Spannungsdifferenz die Schleusenspannung, wie es bei einem Abbremsen einer elektrischen Maschine zu erwarten ist, kann der Ausgleichsstrom fließen.

Je nach Anwendung und gewünschten Eigenschaften können verschiedene Dioden eingesetzt werden. Beispielsweise ist bei Siliziumdioden eine Schleusenspannung von ca. 0,7 V typisch. Wird die Schleusenspannung überschritten, steigt der Strom sehr schnell an. Bei Germaniumdioden, die eine Schleusenspannung von ca. 0,3 V aufweisen, steigt der Strom nach Überschreiten der Schleusenspannung wesentlich langsamer an als bei Siliziumdioden.

Auf diese Weise wird ein kontinuierlicher Stromfluss unterbunden. Bei einer hohen Spannungsdifferenz fließt der Ausgleichsstrom. Die Überlastung eines oder mehrerer netzseitiger Stromrichter bzw. eines oder mehrerer Eingangsgleichrichter wird jedoch auf ein Minimum reduziert oder sogar ganz verhindert, da an den Halbleiterbauelementen Spannung abfällt. Jeder Eingangsgleichrichter versorgt nur sein eigenes Gerät, weshalb dieser nicht überlastet wird und nicht vorzeitig altert.

Vorzugsweise verbindet die Verbindungsleitung einen ersten Knotenpunkt des ersten Umrichters mit einem ersten Knotenpunkt des zweiten Umrichters.

Die auf diese Weise realisierte Zwischenkreiskopplung eignet sich besonders gut für eine Kopplung von Pluspolen der Spannungszwischenkreise.

Die sowohl beim zwei als auch beim drei Halbbrücken umfassenden Stromrichter beschriebene Anordnung der Anode und Kathode der Diode in der ersten Teilverbindungsleitung verhindert einen Stromfluss während einer Vorladephase mit der Vorladeschaltung, da die Diode in Sperrrichtung geschaltet ist.

Die Sperrrichtung der Dioden ermöglicht auch einzig eine Einprägung von elektrischer Energie in die Spannungszwischenkreise der Umrichter. Diese Energie stammt aus dem Spannungszwischenkreiskondensator eines anderen Umrichters oder wird beim Abbremsen frei.

Erst bei einer Impulsfreigabe wenigstens eines lastseitigen Stromrichters ist ein Rückspeisen elektrischer Energie, welche insbesondere beim Abbremsen der mit dem nun freigegebenen Stromrichter verbundenen elektrischen Maschine frei wird, möglich.

Die Impulsfreigabe gibt vorzugsweise Impulse einer Pulsweitenmodulation oder anderer Steuerverfahren frei. Ist die Impulsfreigabe erteilt, können die Leistungshalbleitereinheiten des lastseitigen Stromrichters Impulse zur Umrichtung der Gleichspannung in die von der Last benötigte Wechselspannung ausgeben. Bei einer Impulssperre ist dies nicht möglich.

Das Rückspeisen elektrischer Energie ist mittels der Dioden in der zweiten und in der dritten Teilverbindungsleitung bei zwei Halbbrücken umfassenden Stromrichtern bzw. mittels der Dioden in der zweiten, dritten und vierten Teilverbindungsleitung bei drei Halbbrücken umfassenden Stromrichtern möglich. Die Dioden sind so angeordnet, dass ein Strom von der einphasigen bzw. dreiphasigen Last über die jeweilige Diode zum Knotenpunkt und von dort über die Verbindungsleitung zum zweiten Umrichter fließen kann.

Dies bedeutet, dass beim Abbremsen einer elektrischen Maschine, die sich durch das Abbremsen im generatorischen Betrieb befindet, überschüssige elektrische Energie in einen durch die Zwischenkreiskopplung angekoppelten Spannungszwischenkreis gespeist wird, wenn eine Spannungszwischenkreisspannung des angekoppelten Umrichters niedriger ist als die Spannungszwischenkreisspannung des eigenen Umrichters.

Die Zwischenkreiskopplung samt ihrer Rückspeisefähigkeit ist vorteilhaft erst dann wirksam, wenn alle lastseitigen Stromrichter eine Impulsfreigabe haben. Vorzugsweise wird die Impulsfreigabe erst nach einem abgeschlossenen Vorladen der Spannungszwischenkreise mittels der Vorladeschaltungen erteilt, also wenn die lastseitigen Stromrichter und somit auch der Antriebsverband betriebsbereit sind.

Im Fehlerfall ist kein dauerhafter Kurzschlussstrom möglich, da nur beim betriebsbereitem Antriebsverband die Impulsfreigabe und somit das Rückspeisen möglich ist. Ein Stromfluss über einen netzseitigen Stromrichter ist beim nicht betriebsbereiten Antriebsverband nicht möglich.

Dies gewährleistet einen sicheren Betrieb, da keine Überhitzung und keine davon hervorgerufenen Abschaltungen oder sogar Brände befürchtet werden müssen. Zudem tritt auch keine Überlastung eines oder mehrerer Brückengleichrichter auf.

Daher genügt eine bedarfsgenaue Auslegung des Brückengleichrichters, was Kosten einspart. Auch die Dioden in den Teilverbindungsleitungen werden nur auf den Bedarf des jeweiligen elektrischen Antriebs ausgelegt, da keine Ausgleichsströme über den Brückengleichrichter fließen können. Dies ist einerseits günstiger und erleichtert zudem eine Kopplung von Geräten unterschiedlicher Leistungsklassen.

Aufgrund der noch immer harten Kopplung ist zudem eine hohe Dynamik gewährleistet.

Trotz eines erhöhten Bauteilaufwands können Kosten, die beispielsweise bei der Überdimensionierung der Eingangsgleichrichter entstehen, gesenkt werden. Zudem wird ein Brandrisiko, welches von der Überhitzung von Leitungen und Komponenten im Fehlerfall ausgeht, deutlich gesenkt.

Vorzugsweise sind bei dem lastseitigen Stromrichter, der zwei Halbbrücken umfasst, mit einem zweiten Knotenpunkt nachfolgend genannte Teilverbindungsleitungen verbunden:
Eine vierte Teilverbindungsleitung umfasst eine vierte Diode, wobei eine Kathode der vierten Diode elektrisch mit dem zweiten Knotenpunkt verbunden ist und eine Anode der vierten Diode mit einem Minuspol des Spannungszwischenkreises elektrisch verbunden ist.

Eine fünfte Teilverbindungsleitung umfasst eine fünfte Diode, wobei eine Anode der fünften Diode elektrisch mit dem zweiten Knotenpunkt verbunden ist und eine Kathode der fünften Diode mit dem Hinleiter der einphasigen Last elektrisch verbunden ist.

Eine sechste Teilverbindungsleitung umfasst eine sechste Diode, wobei eine Anode der sechsten Diode elektrisch mit dem zweiten Knotenpunkt verbunden ist und eine Kathode der sechsten Diode mit dem Rückleiter der einphasigen Last elektrisch verbunden ist.

Vorzugsweise sind bei dem lastseitigen Stromrichter, der drei Halbbrücken umfasst, mit einem zweiten Knotenpunkt nachfolgend genannte Teilverbindungsleitungen verbunden:
Eine vierte Teilverbindungsleitung umfasst eine vierte Diode, wobei eine Kathode der vierten Diode elektrisch mit dem zweiten Knotenpunkt verbunden ist und eine Anode der vierten Diode mit einem Minuspol des Spannungszwischenkreises elektrisch verbunden ist.

Eine fünfte Teilverbindungsleitung umfasst eine fünfte Diode, wobei eine Anode der fünften Diode elektrisch mit dem zweiten Knotenpunkt verbunden ist und eine Kathode der fünften Diode mit der ersten Phase der dreiphasigen Last elektrisch verbunden ist.

Eine sechste Teilverbindungsleitung umfasst eine sechste Diode, wobei eine Anode der sechsten Diode elektrisch mit dem zweiten Knotenpunkt verbunden ist und eine Kathode der sechsten Diode mit der zweiten Phase der dreiphasigen Last elektrisch verbunden ist.

Eine siebte Teilverbindungsleitung umfasst eine siebte Diode, wobei eine Anode der siebten Diode elektrisch mit dem zweiten Knotenpunkt verbunden ist und eine Kathode der siebten Diode mit der dritten Phase der dreiphasigen Last elektrisch verbunden ist.

Die mittels dieser Stromrichteranordnung realisierte Zwischenkreiskopplung eignet sich besonders gut für eine Kopplung von Minuspolen der Spannungszwischenkreise.

Gegenüber der weiter oben beschriebenen Stromrichteranordnung, bei welcher jeweils wenigstens eine Diode in der ersten, zweiten und dritten Teilverbindungsleitung bei zwei Halbbrücken umfassenden Stromrichtern bzw. bei welcher jeweils wenigstens eine Diode in der ersten, zweiten, dritten und vierten Teilverbindungsleitung bei drei Halbbrücken umfassenden Stromrichtern angeordnet ist, hat die eben beschriebene Stromrichteranordnung folgenden Vorteil: Eine Stromwelligkeit wird reduziert, da zusätzlich jeweils wenigstens eine Diode in der vierten, fünften und sechsten Teilverbindungsleitung bei zwei Halbbrücken umfassenden Stromrichtern bzw. bei welcher jeweils wenigstens eine Diode in der fünften, sechsten, siebten und achten Teilverbindungsleitung bei drei Halbbrücken umfassenden Stromrichtern angeordnet ist. Zudem bewirkt diese Stromrichteranordnung eine thermische Entlastung des jeweiligen lastseitigen Stromrichters, da ein Rückspeisestrom bei Speisung eines anderen Umrichters nicht über die internen Dioden des als Wechselrichter ausgeführten lastseitigen Stromrichters fließt. Die zusätzlichen Dioden werden vorteilhaft bezüglich ihres EMV-Verhaltens oder bezüglich ihres Stromabrissverhaltens.

Vorzugsweise weist wenigstens eine Zuleitung zur Last wenigstens einen Widerstand auf. Dies betrifft sowohl die einphasige als auch die dreiphasige Last. Vorzugsweise weist jede Zuleitung zur Last genau einen Widerstand zur Strommessung auf.

Vorteilhaft ist der auch als Shunt bezeichnete Widerstand in seiner Funktion als Messshunt niederohmig.

Vorteilhaft ist der Shunt bzw. sind die Shunts auf wenigstens einer Zuleitung zur Last wie folgt angeordnet:
Bei zwei Halbbrücken umfassenden Stromrichtern ist ein erster Shunt parallel zur zweiten Diode und parallel zu einer Leistungshalbleitereinheit einer ersten Halbbrücke auf dem Hinleiter angeordnet. Der Shunt ist auch parallel zur ersten Diode angeordnet.

Bei drei Halbbrücken umfassenden Stromrichtern ist ein erster Shunt parallel zur zweiten Diode und parallel zu einer Leistungshalbleitereinheit einer ersten Halbbrücke, ein zweiter Shunt parallel zur dritten Diode und parallel zu einer Leistungshalbleitereinheit einer zweiten Halbbrücke und ein dritter Shunt parallel zur vierten Diode und parallel zu einer Leistungshalbleitereinheit einer dritten Halbbrücke angeordnet. Die Shunts sind zudem parallel zur ersten Diode.

Die beschriebenen Shunts bieten den Vorteil, dass bei Auftreten eines Kurzschlusses im Umrichter, in einer der Verbindungsleitungen oder Teilverbindungsleitungen der Zwischenkreiskopplung, dies durch die beschriebenen Shunts in anderen angekoppelten Umrichtern erfasst werden kann. Mittels Impulssperre, die beispielsweise von einer übergeordneten Steuereinheit ausgelöst wird, kann ein sofortiges Stoppen der elektrischen Maschine sowie des Umrichterbetriebs erfolgen. Somit sind keine weiteren Schäden zu befürchten.

Auf diese Weise kann ein Kurzschluss mittels Strommessung der Phasen der Last erkannt werden. Zudem ist auch eine Kurzschlusserkennung mittels einer UCE-Überwachung der Leistungshalbleitereinheiten möglich. Die Strommessung erfolgt auch hier über Messshunts. Übersteigt eine überwachte UCE-Spannung eines IGBT bei einem Strom, insbesondere bei einem Kurzschlussstrom, einen Grenzwert, folgt eine Abschaltung des IGBT. Der netzseitige Stromrichter kann, insbesondere mittels der Impulssperre, sicher abgeschaltet werden.

Die Vorteile der Erfindung können wie folgt zusammenfassend beschrieben werden. Während der Vorladephase treten keine Ausgleichsströme auf. Auch im Falle eines Kurzschlusses können keine Ausgleichsströme auftreten, da ein Stromfluss zu anderen Spannungszwischenkreisen über einen Eingangsgleichrichter nicht möglich ist. Tritt in einem parallelgeschalteten Umrichter ein Kurzschluss auf, kann dies mittels der Shunts zur Strommessung oder über die UCE-Überwachung erfasst werden, was ein schnelles Eingreifen und eine sichere Abschaltung ermöglicht. Zudem ist der Antriebsverband einem Fehler gegenüber robust.

Ferner ist eine Kopplung von Geräten unterschiedlicher Leistungsklassen unproblematisch, da keine Ausgleichsströme über die Eingangsgleichrichter fließen können. Dies führt mitunter zu einer Kosteneinsparung, da Komponenten der Eingangsgleichrichter nicht länger überdimensioniert werden müssen und nur für eine eigene Geräteleistung ausgelegt sein müssen. Aufgrund der noch immer harten Kopplung kann eine hohe Dynamik erreicht werden.

Im Folgenden wird die Erfindung anhand der in den Figuren dargestellten Ausführungsbeispiele näher beschrieben und erläutert. Es zeigen:
- FIG 1: eine Ausgestaltung einer Stromrichteranordnung zur Zwischenkreiskopplung mit dreiphasiger Last nach dem Stand der Technik,
- FIG 2: eine Ausgestaltung einer optimierten Stromrichteranordnung zur Zwischenkreiskopplung mit dreiphasiger Last,
- FIG 3: eine Ausgestaltung einer optimierten Stromrichteranordnung zur Zwischenkreiskopplung bei geringem Bauteilaufwand mit dreiphasiger Last,
- FIG 4: eine Ausgestaltung einer optimierten Stromrichteranordnung zur Zwischenkreiskopplung mit Shunts zur Strommessung mit dreiphasiger Last,
- FIG 5: eine Ausgestaltung einer Leistungshalbleitereinheit,
- FIG 6: eine Ausgestaltung einer optimierten Stromrichteranordnung zur Zwischenkreiskopplung bei geringem Bauteilaufwand mit einphasiger Last.

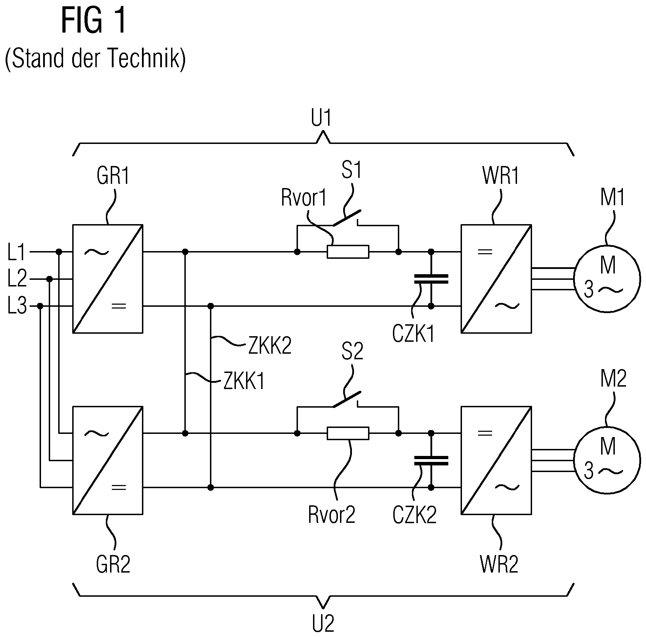

FIG 1 zeigt eine Ausgestaltung einer Stromrichteranordnung zur Zwischenkreiskopplung mit dreiphasiger Last nach dem Stand der Technik. Ein erster Umrichter U1 und ein zweiter Umrichter U2 sind an ein elektrisches Energieversorgungsnetz mit den drei Phasen L1, L2 und L3 angebunden.

Der Umrichter U1 umfasst als netzseitigen Stromrichter einen Eingangsgleichrichter GR1 und als lastseitigen Stromrichter einen Wechselrichter WR1.

Der Wechselrichter WR1 stellt drei Phasen bereit, die einem Anschluss einer dreiphasigen Last, insbesondere einer elektrischen Maschine M1, dienen.

Ein Spannungszwischenkreis zwischen den beiden Stromrichtern weist einen Kondensator, auch Spannungszwischenkreiskondensator genannt, CZK1 und eine optionale Vorladeschaltung, die einen Vorladewiderstand Rvor1 und einen Schalter S1 umfasst, auf. Der Umrichter U2 hingegen umfasst als netzseitigen Stromrichter einen Eingangsgleichrichter GR2 und als lastseitigen Stromrichter einen Wechselrichter WR2. Der Wechselrichter WR2 stellt drei Phasen bereit, die einem Anschluss einer dreiphasigen Last, insbesondere einer elektrischen Maschine M2, dienen.

Die Vorladeschaltung verhindert eine Überlastung des Brückengleichrichters beim Zuschalten des Energieversorgungsnetzes und wird daher häufig eingesetzt.

Ein Spannungszwischenkreis zwischen den beiden Stromrichtern weist einen Spannungszwischenkreiskondensator CZK2 und eine optionale Vorladeschaltung, die einen Vorladewiderstand Rvor2 und einen Schalter S2 umfasst, auf. Die beiden Spannungszwischenkreise sind über zwei Verbindungsleitungen hart gekoppelt.

Die Verbindungsleitung ZKK1 verbindet in der Figur einen Pluspol des Spannungszwischenkreises des Umrichters U1 mit einem Pluspol des Spannungszwischenkreises des Umrichters U2. Die Verbindungsleitung ZKK2 verbindet in der Figur einen Minuspol des Spannungszwischenkreises des Umrichters U1 mit einem Minuspol des Spannungszwischenkreises des Umrichters U2.

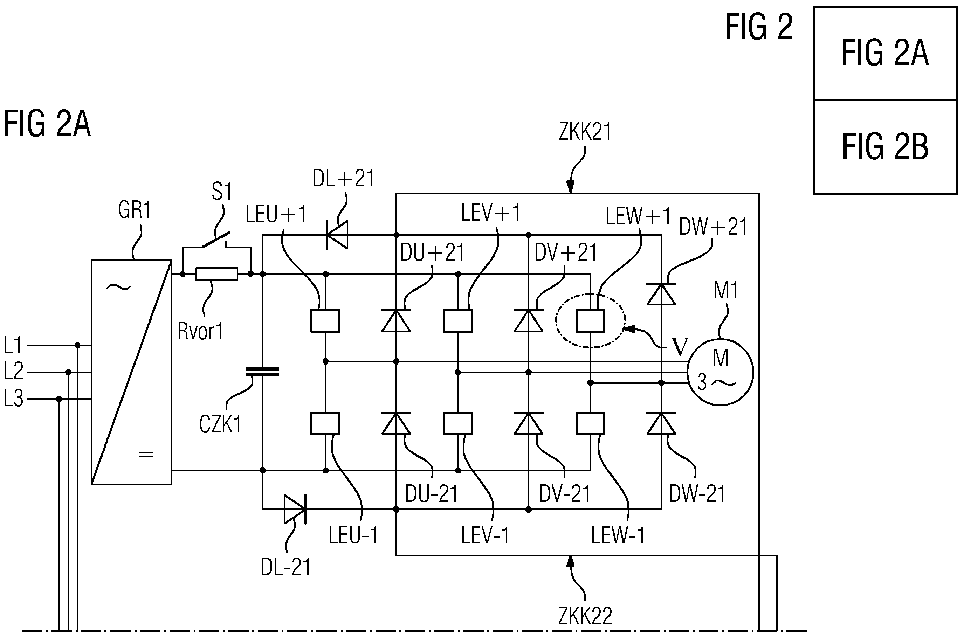

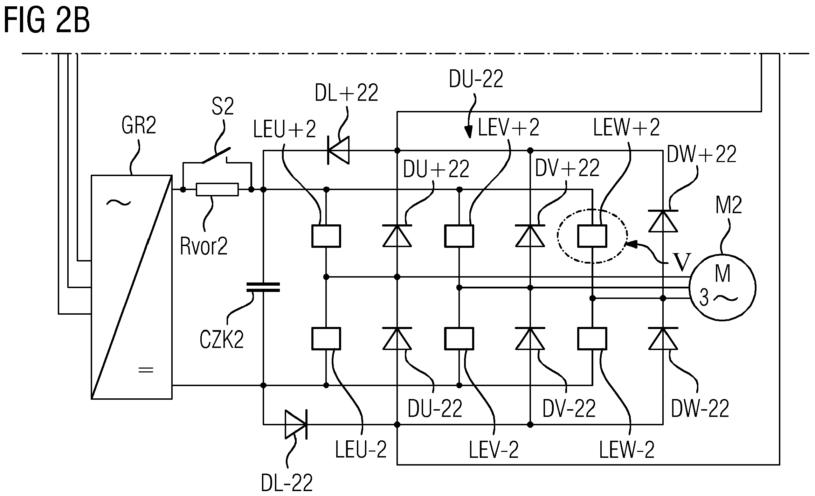

FIG 2 zeigt eine Ausgestaltung einer optimierten Stromrichteranordnung zur Zwischenkreiskopplung mit dreiphasiger Last. FIG 2 umfasst FIG 2A und FIG 2B.

Ein erster Umrichter und ein zweiter Umrichter sind an ein elektrisches Energieversorgungsnetz mit den drei Phasen L1, L2 und L3 angebunden.

Der erste Umrichter umfasst wie bereits in FIG 1 beschrieben einen Eingangsgleichrichter GR1 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor1 und den Schalter S1 aufweist, sowie den Spannungszwischenkreiskondensator CZK1.

Die Vorladeschaltung verhindert eine Überlastung des Brückengleichrichters beim Zuschalten des Energieversorgungsnetzes und wird daher häufig eingesetzt.

Der lastseitige Stromrichter stellt drei Phasen bereit, die dem Anschluss der dreiphasigen Last, insbesondere einer elektrischen Maschine M1, dienen.

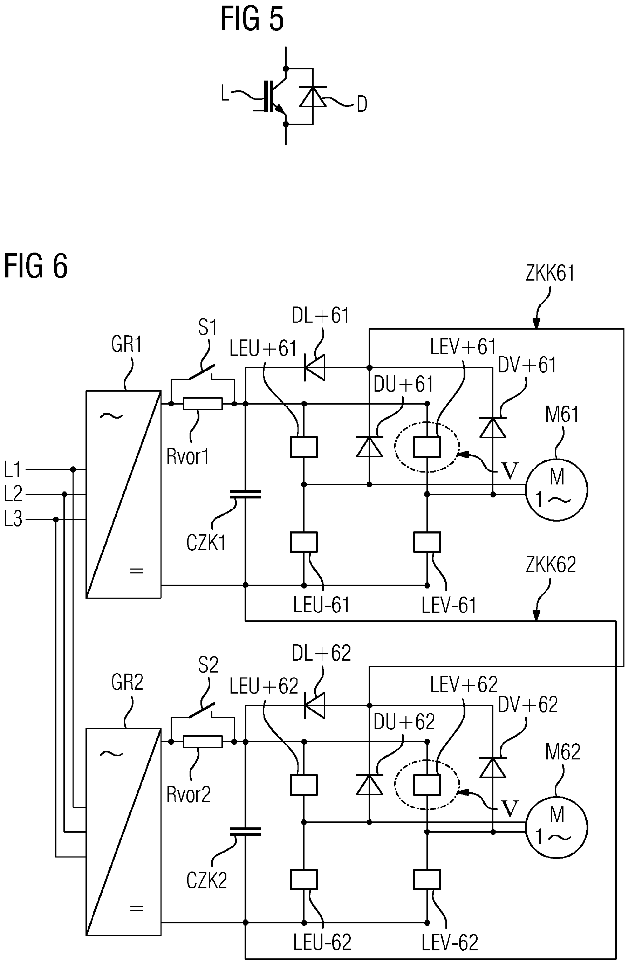

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+1 und LEU-1 auf, die zweite Halbbrücke weist die Leistungshalbleitereinheiten LEV+1 und LEV-1 auf und die dritte Halbbrücke weist die Leistungshalbleitereinheiten LEW+1 und LEW-1 auf. Die Leistungshalbleitereinheiten werden weiter unten in FIG 5 genauer beschrieben.

Der zweite Umrichter umfasst wie bereits in FIG 1 beschrieben einen Eingangsgleichrichter GR2 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor2 und den Schalter S2 aufweist, sowie den Spannungszwischenkreiskondensator CZK2. Der lastseitige Stromrichter stellt drei Phasen bereit, die dem Anschluss der dreiphasigen Last, insbesondere einer elektrischen Maschine M2, dienen.

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+2 und LEU-2 auf, die zweite Halbbrücke weist die Leistungshalbleitereinheiten LEV+2 und LEV-2 auf und die dritte Halbbrücke weist die Leistungshalbleitereinheiten LEW+2 und LEW-2 auf. Die Leistungshalbleitereinheiten werden weiter unten in FIG 5 genauer beschrieben.

Die Pluspole der beiden Umrichter sind mittels einer Verbindungsleitung ZKK21 gekoppelt und die Minuspole der beiden Umrichter sind mittels einer Verbindungsleitung ZKK22 gekoppelt.

Die Dioden DL+21 und DL-21 sind jeweils Teil einer Teilverbindungsleitung und verhindern einen Stromfluss während einer Vorladephase mittels der Vorladeschaltung, da sie in Sperrrichtung geschaltet sind. Dies ermöglicht auch eine Einprägung von elektrischer Energie einzig in die Spannungszwischenkreise der Umrichter.

Erst bei erteilter Impulsfreigabe, also nach abgeschlossener Vorladung, für die Leistungshalbleitereinheiten LEU+1, LEV+1, LEW+1, LEU-1, LEV-1, LEW-1, LEU+2, LEV+2, LEW+2, LEU-2, LEV-2 und LEW-2 wird elektrische Energie, welche beispielsweise beim Abbremsen der elektrischen Maschinen M1 und/oder M2 frei wird, rückgespeist.

Das Rückspeisen elektrischer Energie ist mittels der Dioden DU+21, DV+21, DW+21, DU-21, DV-21, DW-21, DU+22, DV+22, DW+22, DU-22, DV-22 und DW-22 möglich.

Die Dioden DU+21, DV+21 und DW+21 sind Teil von sogenannten Teilverbindungsleitungen und so angeordnet, dass ein Strom von der dreiphasigen Last M1 über die jeweilige Diode zu einem ersten Knotenpunkt des ersten Umrichters und von dort über die jeweilige Verbindungsleitung ZKK21 zu einem ersten Knotenpunkt des zweiten Umrichters fließen kann.

Die Dioden DU+22, DV+22 und DW+22 sind Teil von Teilverbindungsleitungen und so angeordnet, dass ein Strom von der dreiphasigen Last M2 über die jeweilige Diode zum ersten Knotenpunkt des zweiten Umrichters und von dort über die jeweilige Verbindungsleitung ZKK21 zum ersten Knotenpunkt des ersten Umrichters fließen kann.

Vom ersten Knotenpunkt des ersten Umrichters aus kann der Strom über die Diode DL+21 in den Spannungszwischenkreis des ersten Umrichters fließen. Vom ersten Knotenpunkt des zweiten Stromrichters aus kann der Strom über die Diode DL+21 in den Spannungszwischenkreis des ersten Umrichters fließen.

Strom aus dem Spannungszwischenkreis des ersten Umrichters kann über die Diode DL-21 und einen zweiten Knotenpunkt des ersten Umrichters über die Verbindungsleitung ZKK22 zu einem zweiten Knotenpunkt des zweiten Umrichters fließen. Von dort kann über die Dioden DU-22, DV-22 und DW-22 die dreiphasige Last M2 versorgt werden.

Strom aus dem Spannungszwischenkreis des zweiten Umrichters kann über die Diode DL-22 und den zweiten Knotenpunkt des zweiten Umrichters über die Verbindungsleitung ZKK22 zum zweiten Knotenpunkt des ersten Umrichters fließen. Von dort kann über die Dioden DU-21, DV-21 und DW-21 die dreiphasige Last M1 versorgt werden.

Ein dauerhafter Kurzschlussstrom im Fehlerfall ist insofern nicht möglich, als nur bei Impulsfreigabe das Rückspeisen über die Dioden DU+21, DV+21, DW+21, DU-21, DV-21 und DW-21 sowie DU+22, DV+22, DW+22, DU-22, DV-22 und DW-22 erfolgt. Ist der Antriebsverband im Fehlerfall nicht betriebsbereit, liegt eine Impulssperre vor. Ein Stromfluss über die Eingangsgleichrichter GR1 oder GR2 sowie deren Komponenten ist nicht möglich.

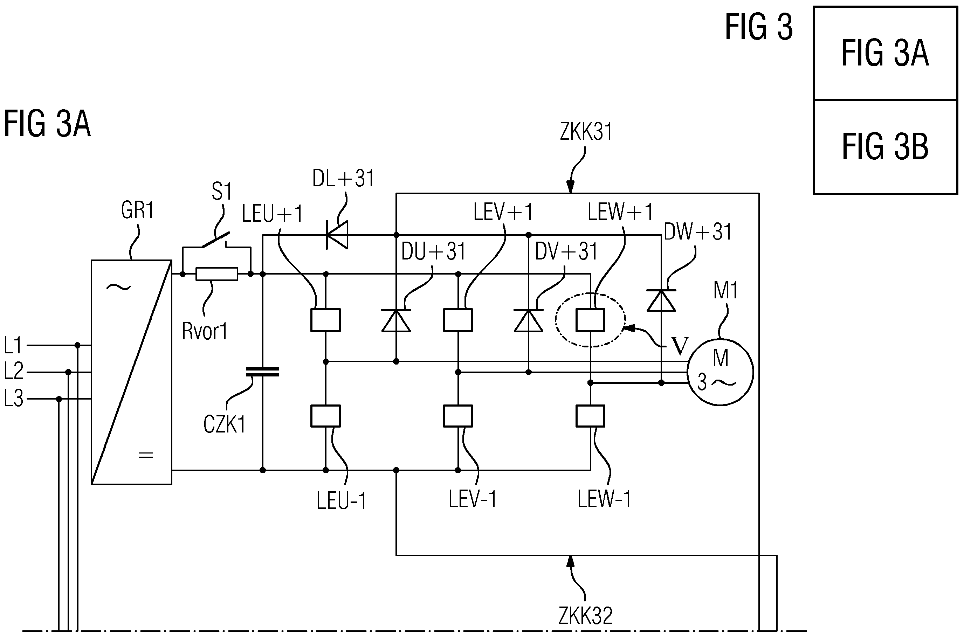

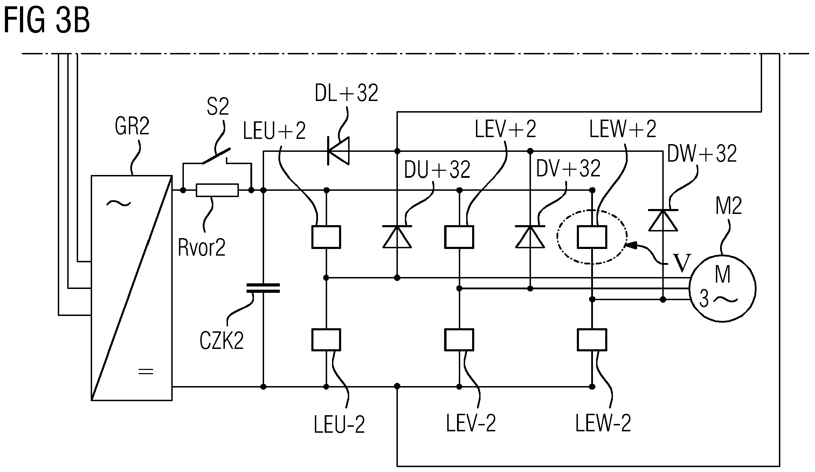

FIG 3 zeigt eine Ausgestaltung einer optimierten Stromrichteranordnung zur Zwischenkreiskopplung bei geringem Bauteilaufwand mit dreiphasiger Last. FIG 3 umfasst FIG 3A und FIG 3B.

Ein erster Umrichter und ein zweiter Umrichter sind an ein elektrisches Energieversorgungsnetz mit den drei Phasen L1, L2 und L3 angebunden.

Der erste Umrichter umfasst wie bereits in FIG 1 und FIG 2 beschrieben einen Eingangsgleichrichter GR1 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor1 und den Schalter S1 aufweist, sowie den Spannungszwischenkreiskondensator CZK1.

Die Vorladeschaltung verhindert eine Überlastung des Brückengleichrichters beim Zuschalten des Energieversorgungsnetzes und wird daher häufig eingesetzt.

Der lastseitige Stromrichter stellt drei Phasen bereit, die dem Anschluss der dreiphasigen Last, insbesondere einer elektrischen Maschine M1, dienen.

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+1 und LEU-1 auf, die zweite Halbbrücke weist die Leistungshalbleitereinheiten LEV+1 und LEV-1 auf und die dritte Halbbrücke weist die Leistungshalbleitereinheiten LEW+1 und LEW-1 auf. Die Leistungshalbleitereinheiten werden weiter unten in FIG 5 genauer beschrieben.

Der zweite Umrichter umfasst wie bereits in FIG 1 und FIG 2 beschrieben einen Eingangsgleichrichter GR2 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor2 und den Schalter S2 aufweist, sowie den Spannungszwischenkreiskondensator CZK2. Der lastseitige Stromrichter stellt drei Phasen bereit, die dem Anschluss der dreiphasigen Last, insbesondere einer elektrischen Maschine M2, dienen.

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+2 und LEU-2 auf, die zweite Halbbrücke weist die Leistungshalbleitereinheiten LEV+2 und LEV-2 auf und die dritte Halbbrücke weist die Leistungshalbleitereinheiten LEW+2 und LEW-2 auf. Die Leistungshalbleitereinheiten werden weiter unten in FIG 5 genauer beschrieben.

Die Pluspole der beiden Umrichter sind mittels einer Verbindungsleitung ZKK31 gekoppelt und die Minuspole der beiden Umrichter sind mittels einer Verbindungsleitung ZKK32 gekoppelt.

Die Diode DL+31 ist Teil einer Teilverbindungsleitung und verhindert einen Stromfluss während einer Vorladephase mittels der Vorladeschaltung, da sie in Sperrrichtung geschaltet ist. Dies ermöglicht auch eine Einprägung von elektrischer Energie einzig in die Spannungszwischenkreise der Umrichter.

Erst bei erteilter Impulsfreigabe wird elektrische Energie rückgespeist.

Das Rückspeisen elektrischer Energie von der jeweiligen elektrischen Maschine ist mittels der Dioden DU+31, DV+31, DW+31 bzw. DU+32, DV+32 und DW+32 möglich. Die Dioden sind Teil von sogenannten Teilverbindungsleitungen und so angeordnet, dass ein Strom von der dreiphasigen Last M1 oder M2 über die jeweilige Diode zum Knotenpunkt und von dort über die jeweilige Verbindungsleitung ZKK31 bzw. ZKK32 zum zweiten Umrichter fließen kann.

Ein dauerhafter Kurzschlussstrom ist insofern nicht möglich, als nur bei Impulsfreigabe das Rückspeisen über die Dioden DU+31, DV+31, DW+31, DU+32, DV+32 und DW+32 erfolgt. Ist der Antriebsverband im Fehlerfall nicht betriebsbereit, liegt eine Impulssperre vor. Ein Stromfluss über die Eingangsgleichrichter GR1 oder GR2 sowie deren Komponenten ist nicht möglich.

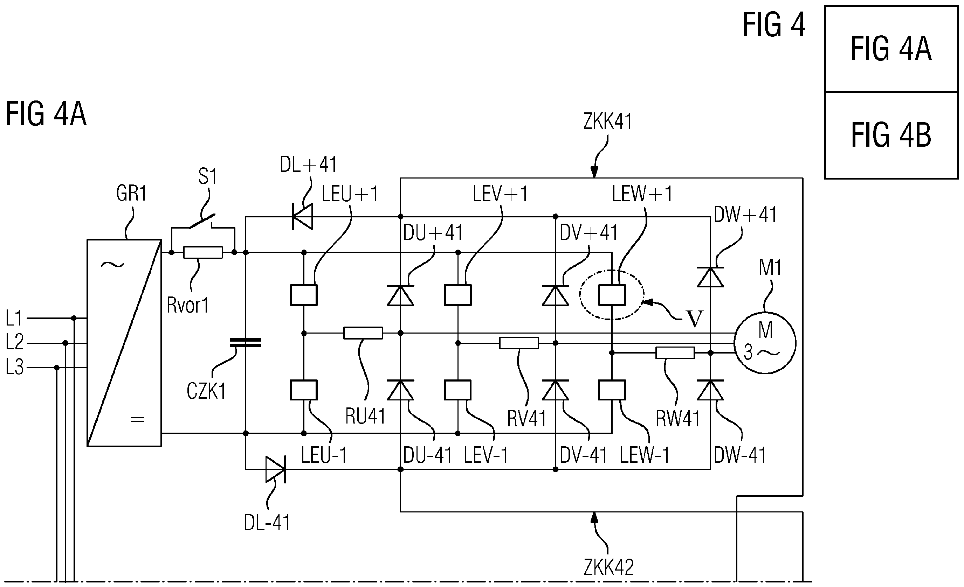

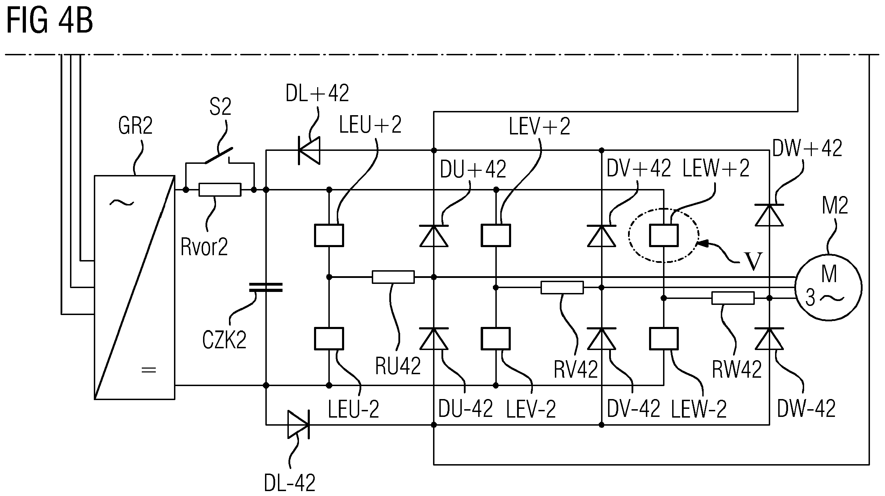

FIG 4 zeigt eine Ausgestaltung einer optimierten Stromrichteranordnung zur Zwischenkreiskopplung mit Shunts zur Strommessung mit dreiphasiger Last. FIG 4 umfasst FIG 4A und FIG 4B.

Ein erster Umrichter und ein zweiter Umrichter sind an ein elektrisches Energieversorgungsnetz mit den drei Phasen L1, L2 und L3 angebunden.

Der erste Umrichter umfasst wie bereits in den vorhergehenden Figuren beschrieben einen Eingangsgleichrichter GR1, einen Spannungszwischenkreis und einen lastseitigen Stromrichter mit den Leistungshalbleitereinheiten LEU+1, LEV+1, LEW+1, LEU-1, LEV-1, LEW-1. Der Spannungszwischenkreis umfasst eine optionale Vorladeschaltung, die den Vorladewiderstand Rvor1 und den Schalter S1 aufweist, sowie den Spannungszwischenkreiskondensator CZK1.

Die Vorladeschaltung verhindert eine Überlastung des Brückengleichrichters beim Zuschalten des Energieversorgungsnetzes.

Der lastseitige Stromrichter stellt drei Phasen bereit, die dem Anschluss der dreiphasigen Last, insbesondere einer elektrischen Maschine M1, dienen.

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+1 und LEU-1 auf, die zweite Halbbrücke weist die Leistungshalbleitereinheiten LEV+1 und LEV-1 auf und die dritte Halbbrücke weist die Leistungshalbleitereinheiten LEW+1 und LEW-1 auf. Die Leistungshalbleitereinheiten werden weiter unten in FIG 5 genauer beschrieben.

Der zweite Umrichter umfasst einen Eingangsgleichrichter GR2, einen Spannungszwischenkreis und einen lastseitigen Stromrichter mit den Leistungshalbleitereinheiten LEU+2, LEV+2, LEW+2, LEU-2, LEV-2, LEW-2. Der Spannungszwischenkreis umfasst eine optionale Vorladeschaltung, die den Vorladewiderstand Rvor2 und den Schalter S2 aufweist, sowie den Spannungszwischenkreiskondensator CZK2. Der lastseitige Stromrichter stellt drei Phasen bereit, die dem Anschluss der dreiphasigen Last, insbesondere einer elektrischen Maschine M2, dienen.

Der lastseitige Stromrichter weist drei Halbbrücken auf. Jede Halbbrücke weist zwei Leistungshalbleitereinheiten auf. Die erste Halbbrücke weist die Leistungshalbleitereinheiten LEU+2 und LEU-2 auf, die zweite Halbbrücke weist die Leistungshalbleitereinheiten LEV+2 und LEV-2 auf und die dritte Halbbrücke weist die Leistungshalbleitereinheiten LEW+2 und LEW-2 auf. Die Leistungshalbleitereinheiten werden weiter unten in FIG 5 genauer beschrieben.

Die Pluspole der beiden Umrichter sind mittels einer Verbindungsleitung ZKK41 gekoppelt und die Minuspole der beiden Umrichter sind mittels einer Verbindungsleitung ZKK42 gekoppelt.

Die Dioden DL+41 und DL-41 sind jeweils Teil einer Teilverbindungsleitung und verhindern einen Stromfluss während einer Vorladephase mittels der Vorladeschaltung, da sie in Sperrrichtung geschaltet sind. Dies ermöglicht auch eine Einprägung von elektrischer Energie einzig in die Spannungszwischenkreise der Umrichter.

Das Rückspeisen elektrischer Energie wie bereits in der sehr ähnlichen Ausgestaltung in FIG 2 beschrieben ist mittels der Dioden DU+41, DV+41, DW+41, DU-41, DV-41, DW-41, DU+42, DV+42, DW+42, DU-42, DV-42 und DW-42 möglich. Die Dioden sind Teil von sogenannten Teilverbindungsleitungen und so angeordnet, dass ein Strom von der dreiphasigen Last M1 oder M2 über die jeweilige Diode zum Knotenpunkt und von dort über die jeweilige Verbindungsleitung ZKK41 bzw. ZKK42 zum zweiten Umrichter fließen kann.

Jede Zuleitung zur Last weist in der Figur genau einen niederohmigen Widerstand RU41, RV41, RW41, RU42, RV42 und RW42 - auch Shunts genannt - zur Strommessung auf.

Die beschriebenen Shunts RU41, RV41, RW41, RU42, RV42 und RW42 bieten folgenden Vorteil: Bei Auftreten eines Kurzschlusses im Umrichter, in einer der Verbindungsleitungen oder Teilverbindungsleitungen der Zwischenkreiskopplung, kann dies durch die beschriebenen Shunts in anderen angekoppelten Umrichtern erfasst werden. Mittels Impulssperre, die beispielsweise von einer übergeordneten Steuereinheit ausgelöst wird, kann ein sofortiges Stoppen der elektrischen Maschine sowie des Umrichterbetriebs erfolgen.

FIG 5 zeigt eine Ausgestaltung einer Leistungshalbleitereinheit. Die Leistungshalbleitereinheit in der Figur umfasst einen IGBT mit antiparalleler Freilaufdiode.

Anstatt eines IGBT, der in der Figur mit L gekennzeichnet ist, können auch andere Halbleiterbauelemente wie unter anderem verschiedene Arten von Transistoren verwendet werden. Halbleiterbauelemente, die einen selbstgeführten Stromrichterbetrieb gewährleisten, sind vorteilhaft. Hierzu zählen beispielsweise Feldeffekttransistoren und Bipolartransistoren in jeglicher Bauart.

Die antiparallele Freilaufdiode D ist in der Anwendung eines Frequenzumrichters für einen Antrieb obligatorisch, jedoch hat sie eine Schutzfunktion inne. Sie schützt das Halbleiterbauelement vor Überspannungen, die auftreten können, wenn das Halbleiterbauelement nicht mehr durchschaltet.

FIG 6 zeigt eine Ausgestaltung einer optimierten Stromrichteranordnung zur Zwischenkreiskopplung bei geringem Bauteilaufwand mit einphasiger Last.

Die in der Figur beschriebene Ausgestaltung zeigt eine Lösung für eine einphasige elektrische Maschine und orientiert sich an FIG 3. Jedoch ist auch eine Anordnung mit weiteren Teilverbindungsleitungen und Dioden - wie in FIG 2 gezeigt - für eine zweiphasige elektrische Maschine möglich.

Zudem ist auch ein Einfügen von Widerständen zur Strommessung - wie in FIG 4 beschrieben - möglich.

Ein erster Umrichter und ein zweiter Umrichter sind an ein elektrisches Energieversorgungsnetz mit den drei Phasen L1, L2 und L3 angebunden.

Der erste Umrichter umfasst einen Eingangsgleichrichter GR1 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor1 und den Schalter S1 aufweist, sowie den Spannungszwischenkreiskondensator CZK1.

Die Vorladeschaltung verhindert eine Überlastung des Brückengleichrichters beim Zuschalten des Energieversorgungsnetzes.

Der lastseitige Stromrichter stellt zwei Phasen bereit, die dem Anschluss der zweiphasigen Last, insbesondere einer elektrischen Maschine M61, dienen.

Der lastseitige Stromrichter weist zwei Halbbrücken auf. Jede Halbbrücke weist zwei Leistungshalbleitereinheiten auf. Die erste Halbbrücke weist die Leistungshalbleitereinheiten LEU+61 und LEU-61 auf und die zweite Halbbrücke weist die Leistungshalbleitereinheiten LEV+61 und LEV-61 auf. Die Leistungshalbleitereinheiten sind in FIG 5 genauer beschrieben.

Der zweite Umrichter umfasst einen Eingangsgleichrichter GR2 als netzseitigen Stromrichter, einen Spannungszwischenkreis und einen lastseitigen Stromrichter. Der Spannungszwischenkreis umfasst eine optionale Vorladeschaltung, die den Vorladewiderstand Rvor2 und den Schalter S2 aufweist, sowie den Spannungszwischenkreiskondensator CZK2. Der lastseitige Stromrichter stellt zwei Phasen bereit, die dem Anschluss der zweiphasigen Last, insbesondere einer elektrischen Maschine M62, dienen.

Der lastseitige Stromrichter weist zwei Halbbrücken auf. Jede Halbbrücke weist zwei Leistungshalbleitereinheiten auf. Die erste Halbbrücke weist die Leistungshalbleitereinheiten LEU+62 und LEU-62 auf und die zweite Halbbrücke weist die Leistungshalbleitereinheiten LEV+62 und LEV-62 auf. Die Leistungshalbleitereinheiten sind in FIG 5 genauer beschrieben.

Die Pluspole der beiden Umrichter sind mittels einer Verbindungsleitung ZKK61 gekoppelt und die Minuspole der beiden Umrichter sind mittels einer Verbindungsleitung ZKK62 gekoppelt.

Die Diode DL+61 ist Teil einer Teilverbindungsleitung und verhindert einen Stromfluss während einer Vorladephase mittels der Vorladeschaltung, da sie in Sperrrichtung geschaltet ist. Dies ermöglicht auch eine Einprägung von elektrischer Energie einzig in die Spannungszwischenkreise der Umrichter.

Erst bei erteilter Impulsfreigabe wird elektrische Energie rückgespeist.

Das Rückspeisen elektrischer Energie ist mittels der Dioden DU+61, DV+61, DU+62 und DV+62 möglich. Die Dioden sind Teil von sogenannten Teilverbindungsleitungen und so angeordnet, dass ein Strom von der dreiphasigen Last M61 oder M62 über die jeweilige Diode zum Knotenpunkt und von dort über die jeweilige Verbindungsleitung ZKK61 bzw. ZKK62 zum zweiten Umrichter fließen kann.

Ein dauerhafter Kurzschlussstrom ist insofern nicht möglich, als nur bei Impulsfreigabe das Rückspeisen über die Dioden DU+61, DV+61, DU+62 und DV+62 erfolgt. Ist der Antriebsverband im Fehlerfall nicht betriebsbereit, liegt eine Impulssperre vor. Ein Stromfluss über die Eingangsgleichrichter GR1 oder GR2 sowie deren Komponenten ist nicht möglich.

## Patentansprüche

1. Stromrichteranordnung umfassend wenigstens einen ersten Umrichter (U1), wenigstens einen zweiten Umrichter (U2) und Verbindungsleitungen ,
wobei die Umrichter (U1, U2) jeweils einen Spannungszwischenkreis, Teilverbindungen, einen Knotenpunkt und einen lastseitigen Stromrichter mit zwei oder drei Halbbrücken aufweisen,
wobei eine der Verbindungsleitungen (ZKK2, ZKK22, ZKK32, ZKK42, 2. ZKK62) Z einen Minuspol des Spannungszwischenkreises des ersten Umrichters (U1) mit einem Minuspol des Spannungszwischenkreises des zweiten Umrichters (U2) verbindet,
wobei eine der Verbindungsleitungen (ZKK1, ZKK21, ZKK31, ZKK41, ZKK61) den Pluspol des Spannungszwischenkreises des ersten Umrichters (U1) mit dem Pluspol des Spannungszwischenkreises des zweiten Umrichters (U2) über die jeweiligen Knotenpunkte verbindet,
2. wobei, 2. wenn ein lastseitiger Stromrichter zwei Halbbrücken umfasst,
der Knotenpunkt Z des jeweiligen Umrichters wenigstens drei Teilverbindungsleitungen umfasst, oder
wenn ein lastseitiger Stromrichter drei Halbbrücken umfasst,
der Knotenpunkt 2. des jeweiligen Umrichters wenigstens vier Teilverbindungsleitungen umfasst,
wobei jede Teilverbindungsleitung wenigstens ein Halbleiterbauelement (DL+21, DU+21, DV+21, DW+21, DL-21, DU-21, DV-21, DW-21, DL+22,..., DL+31,..., DL+32,..., DL+41,..., DL+42,..., DL+61,..., DL+62,...) zur Erzeugung eines Spannungsabfalls aufweist, wobei die Verbindungsleitungen (ZKK1, ZKK2, ZKK21, ZKK22, ZKK31, ZKK32, ZKK41, ZKK42, ZKK61, ZKK62) und Teilverbindungsleitungen zum Bewirken einer Zwischenkreiskopplung des Spannungszwischenkreises des ersten Umrichters (U1) und des Spannungszwischenkreises des zweiten Umrichters (U2) vorgesehen sind,
wobei bei 2. einem lastseitigen Stromrichter, der zwei Halbbrücken umfasst, mit dem jeweiligen Knotenpunkt nachfolgend genannte Teilverbindungsleitungen verbunden sind:
- eine erste Teilverbindungsleitung umfassend eine erste Diode (DL+61, DL+62), wobei eine Anode der ersten Diode (DL+61, DL+62) elektrisch mit dem Knotenpunkt verbunden ist und eine Kathode der ersten Diode (DL+61, DL+62) mit dem Pluspol des Spannungszwischenkreises des jeweiligen Umrichters (U1, U2) elektrisch verbunden ist,
- eine zweite Teilverbindungsleitung umfassend eine zweite Diode (DU+61, DU+62), wobei eine Kathode der zweiten Diode (DU+61, DU+62) elektrisch mit dem Knotenpunkt verbunden ist und eine Anode der zweiten Diode (DU+61, DU+62) mit einem Hinleiter für eine einphasige Last (M61, M62) elektrisch verbunden ist und
- eine dritte Teilverbindungsleitung umfassend eine dritte Diode (DV+61, DV+62), wobei eine Kathode der dritten Diode (DV+61, DV+62) elektrisch mit dem Knotenpunkt verbunden ist und eine Anode der dritten Diode (DV+61, DV+62) mit einem Rückleiter für die einphasige Last (M61, M62) elektrisch verbunden ist 2. und
wobei bei einem lastseitigen Stromrichter, der drei Halbbrücken umfasst, mit dem jeweiligen Knotenpunkt nachfolgend genannte Teilverbindungsleitungen verbunden sind:
- eine erste Teilverbindungsleitung umfassend eine erste Diode (DL+21, DL+22, DL+31, DL+32, DL+41, DL+42), wobei eine Anode der ersten Diode (DL+21, DL+22, DL+31, DL+32, DL+41, DL+42) elektrisch mit dem Knotenpunkt verbunden ist und eine Kathode der ersten Diode (DL+21, DL+22, DL+31, DL+32, DL+41, DL+42) mit dem Pluspol des Spannungszwischenkreises des jeweiligen Umrichters (U1, U2) elektrisch verbunden ist,
- eine zweite Teilverbindungsleitung umfassend eine zweite Diode (DU+21, DU+22, DU+31, DU+32, DU+41, DU+42), wobei eine Kathode der zweiten Diode (DU+21, DU+22, DU+31, DU+32, DU+41, DU+42) elektrisch mit dem Knotenpunkt verbunden ist und eine Anode der zweiten Diode (DU+21, DU+22, DU+31, DU+32, DU+41, DU+42) mit einer ersten Phase des lastseitigen Stromrichters elektrisch verbunden ist und
- eine dritte Teilverbindungsleitung umfassend eine dritte Diode (DV+21, DV+22, DV+31, DV+32, DV+41, DV+42), wobei eine Kathode der dritten Diode (DV+21, DV+22, DV+31, DV+32, DV+41, DV+42) elektrisch mit dem Knotenpunkt verbunden ist und eine Anode der dritten Diode (DV+21, DV+22, DV+31, DV+32, DV+41, DV+42) mit einer zweiten Phase des lastseitigen Stromrichters elektrisch verbunden ist und eine vierte Teilverbindungsleitung umfassend eine vierte Diode (DW+21, DW+22, DW+31, DW+32, DW+41, DW+42), wobei eine Kathode der vierten Diode (DW+21, DW+22, DW+31, DW+32, DW+41, DW+42) elektrisch mit dem Knotenpunkt verbunden ist und eine Anode der vierten Diode (DW+21, DW+22, DW+31, DW+32, DW+41, DW+42) mit einer dritten Phase des lastseitigen Stromrichters elektrisch verbunden ist.

2. Stromrichteranordnung nach Anspruch 1, wobei das Halbleiterbauelement als Diode (DL+21...) ausgeführt ist.

3. Stromrichteranordnung nach einem der vorhergehenden Ansprüche, wobei die Verbindungsleitung (ZKK1, ZKK2, ZKK21, ZKK22, ZKK31, ZKK32, ZKK41, ZKK42, ZKK61, ZKK62) den Knotenpunkt des ersten Umrichters (U1) mit dem Knotenpunkt des zweiten Umrichters (U2) verbindet.

4. Stromrichteranordnung nach einem der vorhergehenden Ansprüche, wobei bei einem lastseitigen Stromrichter, der zwei Halbbrücken umfasst, mit einem zweiten Knotenpunkt des jeweiligen Umrichters nachfolgend genannte Teilverbindungsleitungen verbunden sind:
- eine vierte Teilverbindungsleitung umfassend eine vierte Diode, wobei eine Kathode der vierten Diode elektrisch mit dem zweiten Knotenpunkt verbunden ist und eine Anode der vierten Diode mit einem Minuspol des Spannungszwischenkreises des jeweiligen Umrichters (U1, U2) elektrisch verbunden ist,
- eine fünfte Teilverbindungsleitung umfassend eine fünfte Diode, wobei eine Anode der fünften Diode elektrisch mit dem zweiten Knotenpunkt verbunden ist und eine Kathode der fünften Diode mit dem Hinleiter für eine einphasige Last (M61, M62) elektrisch verbunden ist und
- eine sechste Teilverbindungsleitung umfassend eine sechste Diode, wobei eine Anode der sechsten Diode elektrisch mit dem zweiten Knotenpunkt verbunden ist und eine Kathode der sechsten Diode mit dem Rückleiter für die einphasige Last (M61, M62) elektrisch verbunden ist.

5. Stromrichteranordnung nach einem der vorhergehenden Ansprüche, wobei bei einem lastseitigen Stromrichter, der drei Halbbrücken umfasst, mit einem zweiten Knotenpunkt des jeweiligen Umrichters nachfolgend genannte Teilverbindungsleitungen verbunden sind:
- eine fünfte Teilverbindungsleitung umfassend eine fünfte Diode (DL-21, DL-22, DL-31, DL-32, DL-41, DL-42), wobei eine Kathode der fünften Diode (DL-21, DL-22, DL-31, DL-32, DL-41, DL-42) elektrisch mit dem zweiten Knotenpunkt verbunden ist und eine Anode der fünften Diode (DL-21, DL-22, DL-31, DL-32, DL-41, DL-42) mit einem Minuspol des Spannungszwischenkreises des jeweiligen Umrichters (U1, U2) elektrisch verbunden ist,
- eine sechste Teilverbindungsleitung umfassend eine sechste Diode (DU-21, DU-22, DU-31, DU-32, DU-41, DU-42), wobei eine Anode der sechsten Diode (DU-21, DU-22, DU-31, DU-32, DU-41, DU-42) elektrisch mit dem zweiten Knotenpunkt verbunden ist und eine Kathode der sechsten Diode (DU-21, DU-22, DU-31, DU-32, DU-41, DU-42) mit der ersten Phase des lastseitigen Stromrichters elektrisch verbunden ist und
- eine siebte Teilverbindungsleitung umfassend eine siebte Diode (DV-21, DV-22, DV-31, DV-32, DV-41, DV-42), wobei eine Anode der siebten Diode (DV-21, DV-22, DV-31, DV-32, DV-41, DV-42) elektrisch mit dem zweiten Knotenpunkt verbunden ist und eine Kathode der siebten Diode (DV-21, DV-22, DV-31, DV-32, DV-41, DV-42) mit der zweiten des lastseitigen Stromrichters elektrisch verbunden ist.
- eine achte Teilverbindungsleitung umfassend eine achte Diode (DW-21, DW-22, DW-31, DW-32, DW-41, DW-42), wobei eine Anode der achten Diode (DW-21, DW-22, DW-31, DW-32, DW-41, DW-42) elektrisch mit dem zweiten Knotenpunkt verbunden ist und eine Kathode der achten Diode (DW-21, DW-22, DW-31, DW-32, DW-41, DW-42) mit der dritten Phase des lastseitigen Stromrichters elektrisch verbunden ist.

6. Stromrichteranordnung nach einem der vorhergehenden Ansprüche, wobei wenigstens eine Zuleitung für die Last wenigstens einen Widerstand (RU41, RV41, RW41, RU42, RV42, RW42) aufweist.

7. Stromrichteranordnung nach einem der vorhergehenden Ansprüche, wobei jede Zuleitung für die Last genau einen Widerstand (RU41, RV41, RW41, RU42, RV42, RW42) zur Strommessung aufweist.

## Claims

1. Power converter arrangement comprising at least one first converter (U1), at least one second converter (U2) and connecting lines, wherein the converters (U1, U2) each have an intermediate voltage circuit, partial connections, a node point and a load-side power converter with two or three half bridges, wherein one of the connecting lines (ZKK2, ZKK22, ZKK32, ZKK42, ZKK62) connects a negative pole of the intermediate voltage circuit of the first converter (U1) to a negative pole of the intermediate voltage circuit of the second converter (U2), wherein one of the connecting lines (ZKK1, ZKK21, ZKK31, ZKK41, ZKK61) connects the positive pole of the intermediate voltage circuit of the first converter (U1) to the positive pole of the intermediate voltage circuit of the second converter (U2) by way of the respective node points, wherein if a load-side power converter comprises two half-bridges, the node point of the respective converter comprises at least three partial connecting lines or if a load-side power converter comprises three half-bridges, the node point of the respective converter comprises at least four partial connecting lines,
wherein each partial connecting line has at least one semiconductor component (DL+21, DU+21, DV+21, DW+21, DL-21, DU-21, DV-21, DW-21, DL+22, ..., DL+31,..., DL+32,..., DL+41,..., DL+42,..., DL+61,..., DL+62,...) for generating a voltage drop,
wherein the connecting lines (ZKK1, ZKK2, ZKK21, ZKK22, ZKK31, ZKK32, ZKK41, ZKK42, ZKK61, ZKK62) and partial connecting lines are provided to effect an intermediate circuit coupling of the intermediate voltage circuit of the first converter (U1) and the intermediate voltage circuit of the second converter (U2),
wherein with a load-side power converter, which comprises two half bridges, the following partial connecting lines are connected to the respective node point:
- a first partial connecting line comprising a first diode (DL+61, DL+62), wherein an anode of the first diode (DL+61, DL+62) is electrically connected to the node point and a cathode of the first diode (DL+61, DL+62) is electrically connected to the positive pole of the intermediate voltage circuit of the respective converter (U1, U2),
- a second partial connecting line comprising a second diode (DU+61, DU+62), wherein a cathode of the second diode (DU+61, DU+62) is electrically connected to the node point and an anode of the second diode (DU+61, DU+62) is electrically connected to a feed line for a single phase load (M61, M62) and
- a third partial connecting line comprising a third diode (DV+61, DV+62), wherein a cathode of the third diode (DV+61, DV+62) is electrically connected to the node point and an anode of the third diode (DV+61, DV+62) is electrically connected to a return conductor for the single-phase load (M61, M62) and wherein with a load-side power converter, which comprises three half bridges, the following partial connecting lines are connected to the respective node point:
- a first partial connecting line comprising a first diode (DL+21, DL+22, DL+31, DL+32, DL+41, DL+42), wherein an anode of the first diode (DL+21, DL+22, DL+31, DL+32, DL+41, DL+42) is electrically connected to the node point and a cathode of the first diode (DL+21, DL+22, DL+31, DL+32, DL+41, DL+42) is electrically connected to the positive pole of the intermediate voltage circuit of the respective converter (U1, U2),
- a second partial connecting line comprising a second diode (DU+21, DU+22, DU+31, DU+32, DU+41, DU+42), wherein a cathode of the second diode (DU+21, DU+22, DU+31, DU+32, DU+41, DU+42) is electrically connected to the node point and an anode of the second diode (DU+21, DU+22, DU+31, DU+32, DU+41, DU+42) is electrically connected to a first phase of the load-side power converter and
- a third partial connecting line comprising a third diode (DV+21, DV+22, DV+31, DV+32, DV+41, DV+42), wherein a cathode of the third diode (DV+21, DV+22, DV+31, DV+32, DV+41, DV+42) is electrically connected to the node point and an anode of the third diode (DV+21, DV+22, DV+31, DV+32, DV+41, DV+42) is electrically connected to a second phase of the load-side power converter and a fourth partial connecting line comprising a fourth diode (DW+21, DW+22, DW+31, DW+32, DW+41, DW+42), wherein a cathode of the fourth diode (DW+21, DW+22, DW+31, DW+32, DW+41, DW+42) is electrically connected to the node point and an anode of the fourth diode (DW+21, DW+22, DW+31, DW+32, DW+41, DW+42) is electrically connected to a third phase of the load-side power converter.

2. Power converter arrangement according to claim 1, wherein the semiconductor element is configured as a diode (DL+21...).

3. Power converter arrangement according to one of the preceding claims, wherein the connecting line (ZKK1, ZKK2, ZKK21, ZKK22, ZKK31, ZKK32, ZKK41, ZKK42, ZKK61, ZKK62) connects the node point of the first converter (U1) with the node point of the second converter (U2).

4. Power converter arrangement according to one of the preceding claims, wherein in a load-side power converter which comprises two half-bridges, the following partial connecting lines are connected to a second node point of the respective converter:
- a fourth partial connecting line comprising a fourth diode, wherein a cathode of the fourth diode is electrically connected to the second node point and an anode of the fourth diode is electrically connected to a negative pole of the intermediate voltage circuit of the respective converter (U1, U2),
- a fifth partial connecting line comprising a fifth diode, wherein an anode of the fifth diode is electrically connected to the second node point and a cathode of the fifth diode is electrically connected to the feed line for a single-phase load (M61, M62), and
- a sixth partial connecting line comprising a sixth diode, wherein an anode of the sixth diode is electrically connected to the second node point and a cathode of the sixth diode is electrically connected to the return line for the single-phase load (M61, M62).

5. Power converter arrangement according to one of the preceding claims, wherein in a load-side power converter which comprises three half-bridges, the following partial connecting lines are connected to a second node point of the respective converter:
- a fifth partial connecting line comprising a fifth diode (DL-21, DL-22, DL-31, DL-32, DL-41, DL-42), wherein a cathode of the fifth diode (DL-21, DL-22, DL-31, DL-32, DL-41, DL-42) is electrically connected to the second node point and an anode of the fifth diode (DL-21, DL-22, DL-31, DL-32, DL-41, DL-42) is electrically connected to a negative pole of the intermediate voltage circuit of the respective converter (U1, U2),
- a sixth partial connecting line comprising a sixth diode (DU-21, DU-22, DU-31, DU-32, DU-41, DU-42), wherein an anode of the sixth diode (DU-21, DU-22, DU-31, DU-32, DU-41, DU-42) is electrically connected to the second node point and a cathode of the sixth diode (DU-21, DU-22, DU-31, DU-32, DU-41, DU-42) is electrically connected to the first phase of the load-side power converter, and
- a seventh partial connecting line comprising a seventh diode (DV-21, DV-22, DV-31, DV-32, DV-41, DV-42), wherein an anode of the seventh diode (DV-21, DV-22, DV-31, DV-32, DV-41, DV-42) is electrically connected to the second node point and a cathode of the seventh diode (DV-21, DV-22, DV-31, DV-32, DV-41, DV-42) is electrically connected to the second phase of the load-side power converter.
- an eighth partial connecting line comprising an eighth diode (DW-21, DW-22, DW-31, DW-32, DW-41, DW-42), wherein an anode of the eighth diode (DW-21, DW-22, DW-31, DW-32, DW-41, DW-42) is electrically connected to the second node point and a cathode of the eighth diode (DW-21, DW-22, DW-31, DW-32, DW-41, DW-42) is electrically connected to a third phase of the load-side power converter.

6. Power converter arrangement according to one of the preceding claims, wherein at least one feed line for the load has at least one resistor (RU41, RV41, RW41, RU42, RV42, RW42) .

7. Power converter arrangement according to one of the preceding claims, wherein each feed line for the load has exactly one resistor (RU41, RV41, RW41, RU42, RV42, RW42) for current measurement.

## Revendications

1. Montage d'onduleurs comprenant au moins un premier onduleur (U1), au moins un deuxième onduleur (U2) et des lignes de liaison,
dans lequel les onduleurs (U1, U2) ont chacun un circuit intermédiaire de tension, des liaisons partielles, un point nodal et un convertisseur du côté de la charge ayant deux ou trois demi-ponts,
dans lequel l'une des lignes (ZKK2, ZKK22, ZKK32, ZKK42, ZKK62) de liaison relie un pôle moins du circuit intermédiaire de tension du premier onduleur (U1) à un pôle moins du circuit intermédiaire de tension du deuxième onduleur (U2),
dans lequel l'une des lignes (ZKK1, ZKK21, ZKK31, ZKK41, ZKK61) de liaison relie le pôle plus du circuit intermédiaire de tension du premier onduleur (U1) au pôle plus du circuit intermédiaire de tension du deuxième onduleur (U2) par les points nodaux respectifs,
dans lequel lorsqu'un convertisseur du côté de la charge comprend deux demi-ponts,
le point nodal du convertisseur respectif comprend au moins trois lignes de liaison partielles, ou
lorsqu'un convertisseur du côté de la charge comprend trois demi-ponts, le point nodal du convertisseur respectif comprend au moins quatre lignes de liaison partielles,
dans lequel chaque ligne de liaison partielle a au moins un composant (DL+21, DU+21, DV+21, DW+21, DL-21, DU-21, DV-21, DW-21, DL+22, ..., DL+31, ..., DL+32, ..., DL+41, ..., DL+42, ..., DL+61, ..., DL+62, ...) à semi-conducteur de production d'une chute de tension, dans lequel les lignes (ZKK1, ZKK2, ZKK21, ZKK22, ZKK31, ZKK32, ZKK41, ZKK42, ZKK61, ZKK62) de liaison et des lignes de liaison partielles sont prévues pour provoquer un couplage de circuit intermédiaire du circuit intermédiaire de tension du premier onduleur (U1) et du circuit intermédiaire de tension du deuxième onduleur (U2),
dans lequel pour un convertissement du côté de la charge, qui comprend deux demi-ponts, au point nodal respectif sont reliées des lignes de liaison partielles mentionnées dans ce qui suit :
- une première ligne de liaison partielle comprenant une première diode (DL+61, DL+62), dans lequel une anode de la première diode (DL+61, DL+62) est reliée électriquement au point nodal et une cathode de la première diode (DL+61, DL+62) est reliée électriquement au pôle plus du circuit intermédiaire de tension de l'onduleur (U1, U2) respectif,
- une deuxième ligne de liaison partielle comprenant une deuxième diode (DU+61, DU+62), dans lequel une cathode de la deuxième diode (DU+61, DU+62) est reliée électriquement au point nodal et une anode de la deuxième diode (DU+61, DU+62) est reliée électriquement à un conducteur d'arrivée pour une charge (M61, M62) monophasée, et
- une troisième ligne de liaison partielle comprenant une troisième diode (DV+61, DV+62), dans lequel une cathode de la troisième diode (DV+61, DV+62) est reliée électriquement au point nodal et une anode de la troisième diode (DV+61, DV+62) est reliée électriquement à un conducteur de retour pour la charge (M61, M62) monophasée et,
dans lequel pour un convertisseur du côté de la charge, qui comprend trois demi-ponts, au point nodal respectif sont reliées des lignes de liaison partielles mentionnées dans ce qui suit :
- une première ligne de liaison partielle comprenant une première diode (DL+21, DL+22, DL+31, DL+32, DL+41, DL+42), dans lequel une anode de la première diode (DL+21, DL+22, DL+31, DL+32, DL+41, DL+42) est reliée électriquement au point nodal et une cathode de la première diode (DL+21, DL+22, DL+31, DL+32, DL+41, DL+42) est reliée électriquement au pôle plus du circuit intermédiaire de tension de l'onduleur (U1, U2) respectif,
- une deuxième ligne de liaison partielle comprenant une deuxième diode (DU+21, DU+22, DU+31, DU+32, DU+41, DU+42), dans lequel une cathode de la deuxième diode (DU+21, DU+22, DU+31, DU+32, DU+41, DU+42) est reliée électriquement au point nodal et une anode de la deuxième diode (DU+21, DU+22, DU+31, DU+32, DU+41, DU+42) est reliée électriquement à une première phase du convertisseur du côté de la charge et
- une troisième ligne de liaison partielle comprenant une troisième diode (DV+21, DV+22, DV+31, DV+32, DV+41, DV+42), dans lequel une cathode de la troisième diode (DV+21, DV+22, DV+31, DV+32, DV+41, DV+42) est reliée électriquement au point nodal et une anode de la troisième diode (DV+21, DV+22, DV+31, DV+32, DV+41, DV+42) est reliée électriquement à une deuxième phase du convertisseur du côté de la charge et
une quatrième ligne de liaison partielle comprenant une quatrième diode (DW+21, DW+22, DW+31, DW+32, DW+41, DW+42), dans lequel une cathode de la quatrième diode (DW+21, DW+22, DW+31, DW+32, DW+41, DW+42) est reliée électriquement au point nodal et une anode de la quatrième diode (DW+21, DW+22, DW+31, DW+32, DW+41, DW+42) est reliée électriquement à une troisième phase du convertisseur du côté de la charge.

2. Montage de convertisseur suivant la revendication 1, dans lequel le composant à semi-conducteur est réalisé sous la forme d'une diode (DL+21...) .

3. Montage de convertisseur suivant l'une des revendications précédentes, dans lequel les lignes (ZKK1, ZKK2, ZKK21, ZKK22, ZKK31, ZKK32, ZKK41, ZKK42, ZKK61, ZKK62) de liaison relient le point nodal du premier onduleur (U1) au point nodal du deuxième onduleur (U2).

4. Montage de convertisseur suivant l'une des revendications précédentes, dans lequel pour un convertisseur de côté de la charge, qui comprend deux demi-ponts, au deuxième point nodal de l'onduleur respectif sont reliées des lignes de liaison partielles mentionnées dans ce qui suit :
- une quatrième ligne de liaison partielle comprenant une quatrième diode, dans lequel une cathode de la quatrième diode est reliée électriquement au deuxième point nodal et une anode de la quatrième diode est reliée électriquement à un pôle moins du circuit intermédiaire de tension de l'onduleur (U1, U2) respectif,
- une cinquième ligne de liaison partielle comprenant une cinquième diode, dans lequel une anode de la cinquième diode est reliée électriquement au deuxième point nodal et une cathode de la cinquième diode est reliée électriquement au conducteur d'arrivée pour une charge (M61, M62) monophasée et
- une sixième ligne de liaison partielle comprenant une sixième diode, dans lequel une anode de la sixième diode est reliée électriquement au deuxième point nodal et une cathode de la sixième diode est reliée électriquement au conducteur de retour pour la phase (M61, M62) monophasée.

5. Montage de convertisseur suivant l'une des revendications précédentes, dans lequel pour un convertisseur de côté de la charge, qui comprend trois demi-ponts, à un deuxième point nodal du convertisseur respectif sont reliées des lignes de liaison partielles mentionnés dans ce qui suit :
- une cinquième ligne de liaison partielle comprenant une cinquième diode (DL-21, DL-22, DL-31, DL-32, DL-41, DL-42), dans lequel une cathode de la cinquième diode (DL-21, DL-22, DL-31, DL-32, DL-41, DL-42) est reliée électriquement au deuxième point nodal et une anode de la cinquième diode (DL-21, DL-22, DL-31, DL-32, DL-41, DL-42) est reliée électriquement à un pôle moins du circuit intermédiaire de tension de l'onduleur (U1, U2) respectif,
- une sixième ligne de liaison partielle comprenant une sixième diode (DU-21, DU-22, DU-31, DU-32, DU-41, DU-42), dans lequel une anode de la sixième diode (DU-21, DU-22, DU-31, DU-32, DU-41, DU-42) est reliée électriquement au deuxième point nodal et une cathode de la sixième diode (DU-21, DU-22, DU-31, DU-32, DU-41, DU-42) est reliée électriquement à la première phase du convertisseur du côté de la charge et
- une septième ligne de liaison partielle comprenant une septième diode (DV-21, DV-22, DV-31, DV-32, DV-41, DV-42), dans lequel une anode de la septième diode (DV-21, DV-22, DV-31, DV-32, DV-41, DV-42) est reliée électriquement au deuxième point nodal et une cathode de la septième diode (DV-21, DV-22, DV-31, DV-32, DV-41, DV-42) est reliée électriquement à la deuxième phase du convertisseur du côté de la charge
- une huitième ligne de liaison partielle comprenant une huitième diode (DW-21, DW-22, DW-31, DW-32, DW-41, DW-42), dans lequel une anode de la huitième diode (DW-21, DW-22, DW-31, DW-32, DW-41, DW-42) est reliée électriquement au deuxième point nodal et une cathode de la huitième diode (DW-21, DW-22, DW-31, DW-32, DW-41, DW-42) est reliée électriquement à la troisième phase du convertisseur du côté de la charge.

6. Montage de convertisseur suivant l'une des revendications précédentes, dans lequel au moins une ligne d'arrivée pour la charge a au moins une résistance (RU41, RV41, RW41, RU42, RV42, RW42) .

7. Montage de convertisseur suivant l'une des revendications précédentes, dans lequel chaque ligne d'arrivée pour la charge a pour la mesure du courant exactement une résistance (RU41, RV41, RW41, RU42, RV42, RW42).
